# EUROPEAN PATENT SPECIFICATION

(11) **EP 2 659 824 B1**
(45) Date of publication and mention of the grant of the patent: **11.08.2021**
(21) Application number: 13165175.4
(22) Date of filing: 24.04.2013
(51) Int. Cl.: A47L 9/28, H02P 7/28

(54) **Fluid apparatus**
Fluidvorrichtung
Appareil de fluide

(30) Priority: 01.05.2012 JP 2012104870
(43) Date of publication of application: 06.11.2013
(73) Proprietor: Makita Corporation, Anjo-shi, Aichi 446-8502 (JP)
(72) Inventor: Sakakibara, Yuji, Anjo-shi, Aichi 446-8502 (JP); Yamada, Toru, Anjo-shi, Aichi 446-8502 (JP); Hayashi, Mitsuteru, Anjo-shi, Aichi 446-8502 (JP)
(74) Representative: Kramer Barske Schmidtchen Patentanwälte PartG mbB

(56) References cited:
- EP-A1- 0 370 610
- US-A- 4 939 601
- US-A1- 2010 229 892

## Description

### BACKGROUND

The present invention relates to a fluid apparatus to suction or discharge a gas.

As for the fluid apparatus, there is conventionally known a dust collector that collects dust by suctioning air, or a blower or fan that discharges a gas. Commonly known examples of the dust collector are a vacuum cleaner and an air purifier. Known examples of the blower or fan are an air blower that discharges a high pressure air of 10kPa or more, and a fan that discharges a lower pressure air, as compared with such air blower.

The fluid apparatus of this type includes a known fluid apparatus that is provided with a rechargeable battery and configured to drive a motor as a power source of the fluid apparatus by supplying power to the motor from the battery.

A known example of the fluid apparatus provided with a battery is configured such that, by creating a power line for supplying electric power from each connecting point between each two of a plurality of cells constituting the battery, a changeover is made between use of a battery voltage, which is a voltage between both ends of the battery, and use of an intermediate voltage, which is a voltage between one end of the battery and the power line, as a drive voltage of the motor.

For example, a fluid apparatus described in U.S. Patent No. 5544274 is configured such that a rotation speed of a motor (in other words, a suction amount or a discharge amount of a gas) is changeable by changing over between driving the motor by means of a battery voltage and driving the motor by means of an intermediate voltage through a switch for changeover of an electrical conduction path.

EP 0370610 A1 relates to a suction cleaner having a "power boost" facility and comprising control means for controlling the power output of a variable speed suction motor, wherein a user can vary the voltage and thus the power of the motor by pressing an "increase power" button, a "decrease power" button or a "power boost" button on a hand grip of the cleaner,

US 2010/229892 A1 relates to a surface cleaning apparatus incorporating a rotatable brush device and an electric motor for rotating the brush device,

US 4939601 A relates to a playback apparatus having an electrically operated mode selecting mechanism.

### SUMMARY

According to the technique described in U.S. Patent No. 5544274, however, the number of cells of a battery as a drive source of the motor is changed in order to change over the rotation speed.

This involves a problem that a power balance (hereinafter referred to as a "cell balance") among a plurality of cells constituting the battery becomes disrupted and the battery tends to be deteriorated.

Also, once the electrical conduction path to the motor is set to a high-speed side, high speed rotation of the motor continues until the user thereafter operates a switch to change over the electrical conduction path to the motor to a low-speed side.

Accordingly, even when it is unnecessary to rotate the motor at a high speed, the motor rotates at a high speed and thus battery power is unnecessarily consumed. In this case, for example, a usable time period of the fluid apparatus after the battery is fully charged may be shortened.

The present invention is defined in the independent claim 1.

In a first aspect, it is desirable, in a fluid apparatus to suction or discharge a gas by means of rotation of a motor, to enable changeover of a rotation speed of the motor without disrupting a cell balance of a battery and also enable reduction of a power consumption of the battery by performing the changeover efficiently.

In the fluid apparatus, when a first drive command is inputted, a first drive device flows a first drive current from the battery to the motor through a current limiting device, to thereby cause normal rotation of the motor.

Also, while an operation switch is being operated by a user, a second drive device flows a second drive current, which is larger than the first drive current, from the battery to the motor, to thereby cause high speed rotation of the motor.

According to the fluid apparatus, therefore, the user may operate the operation switch in order to cause high speed rotation of the motor, to thereby increase a suction amount or a discharge amount of a gas as compared with the amount in the normal rotation. On the other hand, the user may stop operating the operation switch in order to return the motor to the normal rotation.

According to the fluid apparatus as described above, since a time period of high speed rotation of the motor is limited to a time period during which the user is operating the operation switch, the time period of the high speed rotation can be suppressed to a necessary minimum level.

Therefore, the fluid apparatus allows reduction of the power consumption of the battery. For example, it is possible to lengthen a usable time period of the fluid apparatus after the battery is fully charged.

In the fluid apparatus, the first drive device causes the normal rotation of the motor by limiting the current flowing to the motor to the first drive current by means of a current limiting device, which is provided on an electrical conduction path from the battery to the motor.

According to the fluid apparatus, therefore, it is possible to suppress disruption of the cell balance of the battery by changing over the rotation speed of the motor. Thus, deterioration of the battery can be suppressed.

As the aforementioned current limiting device, a resistor, for example, may be used. In this case, the second drive device may be constituted by a current path that bypasses the resistor as the current limiting device and a circuit that connects/disconnects the current path in accordance with an operational state of the operation switch by the user.

In a case where the operation switch is a normally-open type (i.e., an a-contact) switch that is in an on state while being operated by the user, and allows flow of the second drive current in the on state (in other words, in a case where a current capacity of the operation switch is large), it may be possible to provide the operation switch on the current path that bypasses the resistor so as to connect/disconnect the current path by means of the operation switch. This may constitute the second drive device.

On the other hand, in a case where a resistor is used as the current limiting device, the first drive current flows through the resistor, and the battery power is consumed in the resistor. Also, the resistor can limit the current flowing to the motor, but cannot control a magnitude of the current.

Accordingly, the current limiting device may be constituted by a semiconductor device that is capable of controlling the current flowing through the electrical conduction path from the battery to the motor. Each of the first drive device and the second drive device may be configured to control the current flowing from the battery to the motor through the semiconductor device.

With the above described configuration, the first drive device and the second drive device can control the current flowing to the motor to the first drive current or the second drive current, through the semiconductor device. Additionally, a power loss which occurs in the current limiting device (i.e., the semiconductor device) can be reduced as compared with the case of using a resistor as the current limiting device.

Further, each of the first drive device and the second drive device may be realized by a function of a microcomputer.

The fluid apparatus includes a microcomputer to which an operation switch is connected.

When an operation switch is operated by the user, the microcomputer determines that a first drive command has been inputted, and executes a first control process. The first control process is a process to control the semiconductor device such that the first drive current flows to the motor.

When an operation by the user of the operation switch has continued for a predetermined time period or more, the microcomputer then executes a second control process until the operation by the user of the operation switch is finished. The second control process is a process to control the semiconductor device such that the second drive current flows to the motor.

Accordingly, in the fluid apparatus, a function as the first drive device can be realized by the first control process executed by the microcomputer, while a function as the second drive device can be realized by the second control process executed by the microcomputer.

Also, according to the fluid apparatus, since the microcomputer determines whether or not to execute the first control process and the second control process in accordance with the operational state of the operation switch by the user, the user can drive the fluid apparatus and change over the suction amount and the discharge amount of the gas by simply operating the operation switch.

Next, in the fluid apparatus, the first drive device and the second drive device may be configured to control the semiconductor device as described below, to thereby control the drive current of the motor.

Specifically, the first drive device performs a switching drive of the semiconductor device by means of a pulse-width modulation signal having a duty ratio corresponding to the first drive command, to thereby flow the first drive current to the motor.

The second drive device drives the semiconductor device by means of a drive signal having a larger duty ratio than the pulse-width modulation signal used by the first drive device to perform the switching drive of the semiconductor device, to thereby flow the second drive current to the motor.

With the above-described configurations of the first drive device and second drive device, a control signal to be outputted to the semiconductor device may be a two-valued signal having high and low levels. Thus, the control signal may be generated easily.

The drive current flowing to the motor through the semiconductor device also may be controlled by, for example, controlling a voltage of a control signal to be applied to a control terminal of the semiconductor device. However, controlling the voltage of the control signal requires an analog circuit for voltage control.

Compared to this, it may be possible to use a pulse-width modulation signal to perform switching drive of the semiconductor device. The pulse-width modulation signal is a two-valued signal with a controlled duty ratio, and thus can be generated easily by a digital circuit, such as a microcomputer or the like.

According to the fluid apparatus, therefore, it is unnecessary to generate a control signal using an analog circuit in order to control the drive current flowing to the motor through the semiconductor device. Thus, it may be possible to simplify a configuration of the apparatus.

The fluid apparatus may be applied to a dust collector, or may be applied to a blower.

Particularly, since the fluid apparatus includes a battery, it may be applied to a rechargeable fluid apparatus, such as a rechargeable cleaner, a rechargeable blower, and the like, which does not need to be connected to an external power source (commercial power source or the like) through a power cord during use.

### BRIEF DESCRIPTION OF THE DRAWINGS

The present invention will now be described by way of example with reference to the accompanying drawings, in which:
FIG. 1 is a perspective view showing an appearance of a handy cleaner in one embodiment;
FIG. 2 is a block diagram showing configurations of a battery pack and a control circuit board;
FIG. 3 is a transition diagram showing a transition among operation modes changed over in accordance with a switching operation;
FIG. 4 is a flowchart showing an operation mode setting process performed in a control circuit; and
FIG. 5 is a perspective view showing a rechargeable blower as a modified example.

### DETAILED DESCRIPTION OF THE PREFERRED EMBODIMENTS

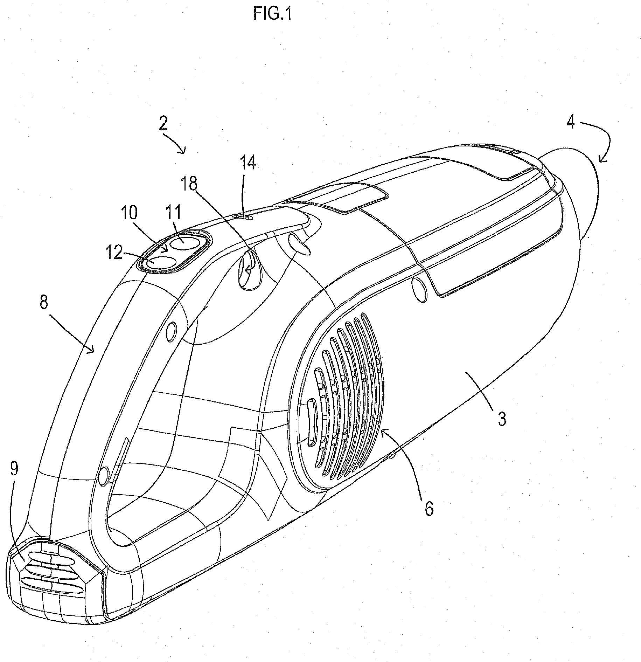

As shown in FIG. 1, a handy cleaner 2 of the present embodiment includes a cylindrically-shaped housing 3, a suction port 4 provided at a front end of the housing 3 to suction air, a discharge port 6 provided at a side wall of the housing 3 to discharge the air after removing dust therefrom, and a holding section 8 provided at a rear end side of the housing 3 to be held by a user.

An electronic switch 10 is provided at a top end portion of the holding section 8 so as to allow the user to operate the electronic switch 10 while holding the holding section 8. An LED 14 which is lit during operation of the handy cleaner 2 is provided forward of the electronic switch 10.

The electronic switch 10 includes two normally-open type operation switches. Each of the two operation switches is in an on state while being operated (pressed) by the user and in an off state while not being operated by the user. One of the two operation switches is configured as a driving switch 11 to input therethrough a drive command (a first drive command or a second drive command), and the other is configured as a stopping switch 12 to input therethrough a stop command.

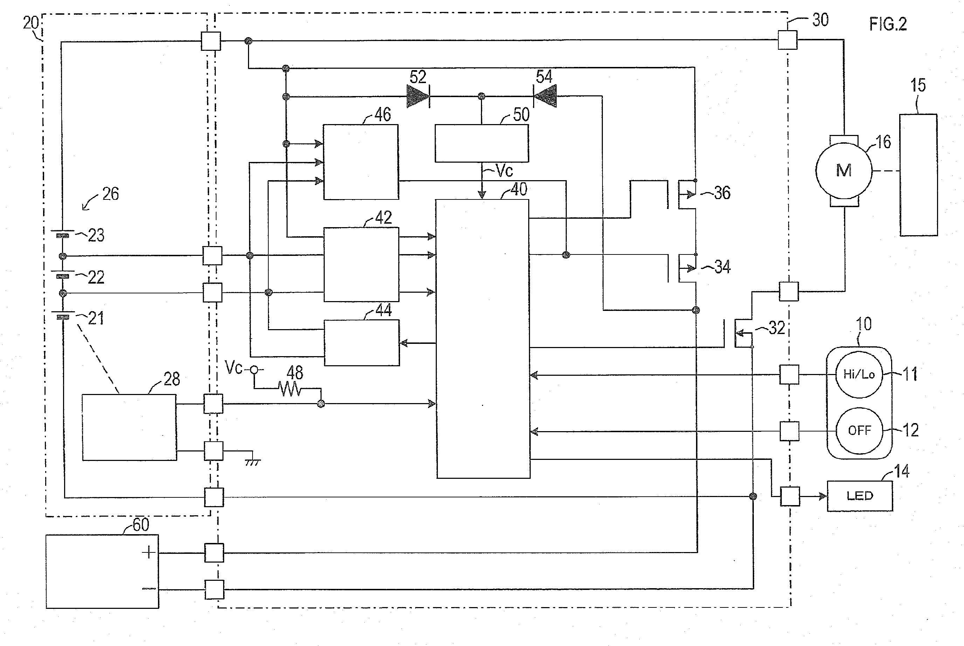

Inside the housing 3 of the handy cleaner 2, there are provided a suction fan 15, a motor 16, a battery pack 20, and a control circuit board 30, as shown in FIG. 2

The suction fan 15 is a fan configured to suction air through a suction port 4 into the housing 3 and discharge the air through the discharge port 6. The suction fan 15 is disposed at an opposite position to the suction port 4 with a filter (not shown) to remove dust from the suctioned air located therebetween.

The motor 16, which is a direct-current motor, is disposed on an opposite side to the suction port 4. In other words, the motor 16 is disposed such that the suction fan 15 is located between the motor 16 and the suction port 4. The suction fan 15 is connected to a rotation axis of the motor 16. The motor 16 is capable of causing the suction fan 15 to rotate by rotation of the motor 16 itself, to thereby suction air into the housing 3.

The battery pack 20 includes a battery 26 and a thermistor 28, and is constituted by housing these components in a synthetic resin package. The battery 26 is constituted by a series connection of a plurality of (three in FIG. 2) rechargeable/dischargeable cells 21, 22, 23. The thermistor 28 is an element to detect a temperature of the cells 21-23 of the battery 26.

The battery pack 20 is removably housed in the housing 3 at a lower rear end of the housing 3. The handy cleaner 2 is provided with a lid 9 at a lower end of the holding section 8 (see FIG. 1). When installing or removing the battery pack 20 in or from the housing 3, the lid 9 is removed.

The control circuit board 30 is disposed between the motor 16 and the battery pack 20 in the housing 3. The control circuit board 30 is assembled with various electronic parts to receive power supply from an AC adapter 60 and recharge the battery 26 as well as to receive power supply from the battery 26 and discharge from the battery 26 to the motor 16 (in other words, power supply to the motor 16 or driving of the motor 16).

The AC adapter 60 is a unit designed to receive power supply from an alternating-current source and generate a direct-current voltage to recharge the battery 26, and supply a constant recharging current through the control circuit board 30. The AC adapter 60 is constituted as a separate component from the handy cleaner 2.

At an upper portion of a sidewall of the housing 3 and in a vicinity of the LED 14, there is provided a DC jack 18, in which a DC plug (not shown) provided at an end of a power cord drawn from the AC adapter 60 is inserted to thereby supply a direct-current voltage from the AC adapter 60.

Next, a description will be provided of a circuit configuration of the control circuit board 3.

As shown in FIG. 2, a discharge path to flow current from a positive side of the battery 26 to a negative side of the battery 26 through the motor 16 is formed on the control circuit board 30. In the discharge path, a discharge control FET 32 to control discharge current from the battery 26 to the motor 16 (that is, a drive current of the motor 16) is provided on a negative side of the motor 16.

Also, a charge path to connect a positive terminal (+) of the AC adapter 60 to the positive side of the battery 26 and connect a negative terminal (-) of the AC adapter 60 to the negative side of the battery 26 is formed on the control circuit board 30.

In a part of the charge path from the positive terminal (+) of the AC adapter 60 to the positive side of the battery 26, a charge control FET 34 and a charge protection FET 36 to protect the battery 26 are provided.

Each of the discharge control FET 32, the charge control FET 34, and the charge protection FET 36 is a switching device to connect/disconnect the discharge path or the charge path, and is driven by a control circuit 40 which controls charge and discharge of the battery 26.

The control circuit 40 includes a microcomputer constituted mainly by a CPU, a ROM, a RAM, etc. The control circuit 40 performs driving of the motor 16 and charging of the battery 26 by turning on/off each of the aforementioned FETs 32-36 in accordance with a control program stored in the ROM.

Specifically, the control circuit 40 generates a PWM signal (a pulse width modulation signal) having a predetermined duty ratio in accordance with a drive command (a first drive command or a second drive command) inputted by the user through a driving switch 11, and outputs the PWM signal to the discharge control FET 32, to thereby rotate the motor 16 at a speed in accordance with the drive command.

When the stopping switch 12 is operated (i.e., pressed down) and thereby a stop command is inputted, the control circuit 40 turns off the discharge control FET 32 to stop driving of the motor 16.

If the AC adapter 60 is connected while driving of the motor 16 is stopped and an output voltage from the battery 26 is lower than a threshold voltage for determination of whether to start charging, the control circuit 40 switches each of the charge control FET 34 and the charge protection FET 36 from an off state to an on state to thereby start charging of the battery 26.

Control of charging of the battery 26 by the control circuit 40 continues until the battery 26 reaches a fully charged state. Once the battery 26 has reached the fully charged state, the charge control FET 34 and the charge protection FET 36 are switched to the off state, and charging of the battery 26 is completed.

When performing a charge and discharge control, the control circuit 40 monitors parameters, such as respective output voltages of the cells 21-23 constituting the battery 26 and a temperature of the battery 26, in addition to parameters, such as an output voltage from the battery 26. If any of values of these parameters is an abnormal value, the control circuit 40 causes the charge protection FET 36 and the discharge control FET 32 to be in the off state, to thereby stop charging or discharging of the battery 26.

For this purpose, the control circuit board 30 is provided with a cell voltage detection unit 42 to detect the respective output voltages of the cells 21-23 of the battery 26. Detection signals indicating the respective voltages of the cells 21-23 are inputted from the cell voltage detection unit 42 to the control circuit 40.

The control circuit board 30 is also provided with a protection circuit 46. The protection circuit 46 is a circuit that receives the respective voltages from the cells 21-23 of the battery 26, and forcibly turns off the charge control FET 34 when any of the voltages has reached a threshold value higher than an overvoltage determination value at the time of charging by the control circuit 40 (that is, when overvoltage protection by the control circuit 40 has not functioned normally).

The control circuit board 30 is also provided with a disconnection detection unit 44. The disconnection detection unit 44 sets a predetermined electric potential at connecting portions among the cells 21-23 in the battery 26 to thereby detect a disconnection in the battery 26 based on the voltages of the cells detected by the cell voltage detection unit 42.

When a disconnection in the battery 26 is detected using the disconnection detection unit 44, the control circuit 40 inhibits charging or discharging of the battery 26. The control circuit 40 monitors the temperature of the battery 26 using the thermistor 28 provided in the battery pack 20. For this purpose, a temperature detection circuit is provided on the control circuit board 30. The temperature detection circuit is formed by connecting one end of the thermistor 28 to the ground line and connecting the other end of the thermistor 28 to a power line through a resistor 48.

As a result, the temperature of the battery 26 is received by the control circuit 40 in the form of a both-end voltage of the thermistor 28 as a detected voltage.

The control circuit board 30 is also provided with a regulator 50 to supply the control circuit 40 with a power-supply voltage (a constant direct-current voltage) for operation. The regulator 50, which is configured to be capable of being supplied with respective direct-current voltages from both of the battery 26 and the AC adapter 60 through two diodes 52 and 54, generates the constant direct-current voltage for operation of the control circuit 40 using the direct-current voltage supplied from one of the battery 26 and the AC adapter 60.

The control circuit 40 lights the LED 14 provided to the housing 3 while performing charge control of the battery 26 by receiving power supply from the regulator 50, to thereby notify the surroundings of the ongoing charge control.

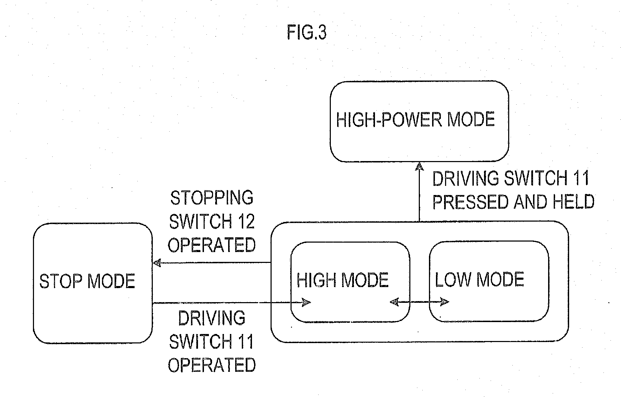

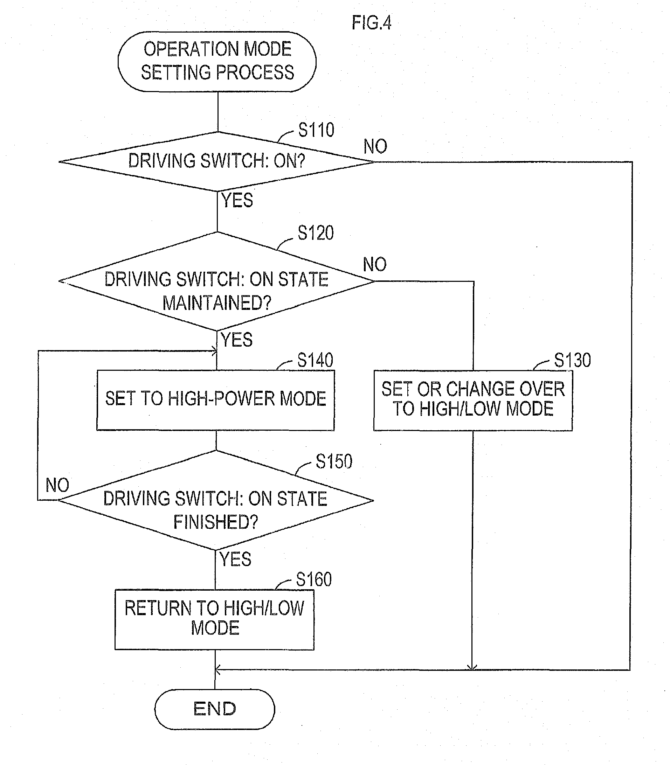

Next, a description will be provided of a control procedure when the control circuit 40 drives the motor 16 in accordance with a drive command from the driving switch 11 with reference to a transition diagram shown in FIG. 3 and the flowchart shown in FIG. 4.

In the present embodiment, as shown in FIG. 3, three operation modes are prepared as operation modes of the control circuit 40 when driving the motor 16 to thereby rotate the suction fan 15. The three operation modes are a high mode to rotate the motor 16 at a high speed, a low mode to rotate the motor 16 at a low speed, and a high-power mode to rotate the motor 16 at a super-high speed.

The ROM of the control circuit 40 stores each drive duty ratio of the discharge control FET 32 set for each of the operation modes as control data to drive the motor 16 in each of the operation modes.

The drive duty ratios are set for the respective operation modes in a stepwise manner so as to be smallest in the low mode (for example, 50% or less) and largest in the high-power mode (for example, 100%).

When the operation mode is set to one of the high mode, the low mode, and the high-power mode in an operation mode setting process shown in FIG. 4, the control circuit 40 reads out the drive duty ratio corresponding to the set operation mode from the ROM, and outputs a PWM signal (a pulse-width modulation signal) corresponding to the read-out drive duty ratio as a drive signal for the discharge control FET 32.

As a result, a drive current corresponding to the duty ratio of the PWM signal flows into the motor 16, the motor 16 (and thus the suction fan 15) rotates at a rotation speed corresponding to the drive current, and eventually, a suction amount of the handy cleaner 2 is controlled correspondingly to the operation mode.

The control circuit 40 enters into a stop mode to stop driving of the motor 16 immediately after a power supply from the regulator 50 or when a stop command is inputted through the stopping switch 12.

As shown in FIG. 3, when the user operates (presses down) the driving switch 11 in the stop mode and the driving switch 11 is changed over from an off state to an on state, the operation mode is changed over to the high mode. The changeover of the driving switch 11 from the off state to the on state as a result of operation of the driving switch 11 may correspond to an input of the first drive command.

If the driving switch 11 is operated and thereby the driving switch 11 is changed from the off state to the on state, while the operation mode is the high mode, the operation mode is changed over to the low mode.

If the driving switch 11 is operated and thereby the driving switch 11 is changed from the off state to the on state, while the operation mode is the low mode, the operation mode is changed over to the high mode.

That is, the operation mode of the control circuit 40 is changed over by turns from the high mode to the low mode, or from the low mode to the high mode, each time the driving switch 11 is operated and the driving switch 11 is changed from the off state to the on state (i.e., each time the first drive command is inputted). The rotation of the motor 16 in the high mode and the rotation of the motor 16 in the low mode may be interpreted as the normal rotation.

Also, if the driving switch 11 is operated continuously for a predetermined time period or more (in other words, if the driving switch 11 is pressed and held for a long time) while the operation mode of the control circuit 40 is set to the high mode or the low mode, the operation mode is changed over to the high-power mode. Such continuous operation of the driving switch 11 for the predetermined time period or more (in other words, pressing and holding of the driving switch 11 for a long time) may correspond to an input of the second drive command.

The high-power mode is an operation mode to rotate the motor 16 at a super-high speed to thereby maximize the suction amount by the handy cleaner 2 only while the driving switch 11 is being operated (i.e., pressed down).

Accordingly, if the user stops operation of the driving switch 11 while the operation mode is the high-power mode, the operation mode is changed over to the operation mode (the high mode or the low mode) immediately before the current changeover to the high-power mode.

Such changeover of the operation mode is performed by the control circuit 40 executing the operation mode setting process shown in FIG. 4. The operation mode setting process is a process performed by the control circuit 40 periodically and repeatedly. When the operation mode setting process is started, it is first determined in S110 ("S" represents Step) whether or not the driving switch 11 is in the on state (that is, whether or not the driving switch has been operated).

When it is determined in S110 that the driving switch 11 is not in the on state, the present operation mode setting process is terminated without changing the operation mode.

When it is determined in S110 that the driving switch 11 is in the on state, the present process proceeds to S120, and then it is determined whether or not the on state has been being maintained for a predetermined time period or more (that is, whether or not the user has been operating the driving switch 11 for the predetermined time period or more).

When it is determined in S120 that the on state of the driving switch 11 has not been being maintained for the predetermined time period or more, the present process proceeds to S130. In S130, the operation mode is changed over to the high mode or the low mode depending on the current operation mode. Then, the present operation mode setting process is terminated.

That is, in S130, the operation mode is changed over to the high mode if the current operation mode is the stop mode, to the low mode if the current operation mode is the high mode, and to the high mode if the current operation mode is the low mode.

When it is determined in S120 that the on state of the driving switch 11 has been being maintained for the predetermined time period or more, the present process proceeds to S140. In S140, the operation mode is set to the high-power mode.

In subsequent S150, it is determined whether or not the on state of the driving switch 11 has been finished (that is, the user's operation of the driving switch 11 has been finished and the driving switch 11 has entered into the off state).

When it is determined in S150 that the on state of the driving switch 11 has not been finished, the present process again proceeds to S140 to maintain the operation mode in the high-power mode. When it is determined in S150 that the on state of the driving switch 11 has been finished, the present process proceeds to S160.

In S160, the operation mode is changed over to an immediately-preceding operation mode (the high mode or the low mode) before the operation mode was changed over to the high-power mode in S140. Then, the present operation mode setting process is terminated.

In the handy cleaner 2 of the present embodiment, as described above, when the user operates the driving switch 11 in a single pressing manner for a shorter time than a set time (hereinafter referred to as a "single pressing operation"), the operation mode is set to the high mode and the motor 16 is rotated at a high speed.

In this state, if the user performs the single pressing operation of the driving switch 11, the operation mode is changed over to the low mode and the motor 16 is rotated at a low speed.

Thereafter, each time the user performs the single pressing operation of driving switch 11, the operation mode is changed over to the high mode or the low mode alternately, and the rotation speed of the motor 16 is changed over from low speed to high speed, or from high speed to low speed.

In contrast, if the user continuously operates (presses down) the driving switch 11 for the set time or more and the on state of the driving switch 11 is maintained for the set time or more, the operation mode is changed over to the high-power mode and is also maintained until the user thereafter stops operation (pressing) of the driving switch 11 and the driving switch 11 enters into the off state.

In the high-power mode, the discharge control FET 32 is driven by a PWM signal having a maximum drive duty ratio (for example, 100%) larger than in the other operation modes, and a drive current larger than in the other operation modes is supplied to the motor 16.

Accordingly, the user is able to not only change over the suction amount by the handy cleaner 2 between two levels, i.e., a high level and a low level, by means of the single pressing operation of the driving switch 11 (i.e., by means of an input of the first drive command), but also temporarily maximize the suction amount by the handy cleaner 2 by means of pressing and holding the driving switch 11 (i.e., by means of inputting a second drive command).

In the high-power mode, the drive current flowing into the motor 16 is larger than in the other operation modes, resulting in a higher power consumption of the battery 26.

However, according to the handy cleaner 2 of the present embodiment, the high-power mode is set only during a time period while the user is operating the driving switch 11, and the operation mode returns to a normal operation mode (i.e., the high mode or the low mode) to be set by means of the single pressing operation of the driving switch 11 once the user stops operation of the driving switch 11.

According to the handy cleaner 2 of the present embodiment, therefore, a time period while the high-power mode is set can be suppressed to a necessary minimum level.

Thus, according to the handy cleaner 2 of the present embodiment, a battery power consumed in the high-power mode can be suppressed to a necessary minimum level. For example, it is possible to lengthen a time period while the handy cleaner 2 is usable after fully charging the battery 26.

Also, in the handy cleaner 2 of the present embodiment, when changing over the rotation speed of the motor 16 in accordance with the user's operation of the driving switch 11, the control circuit 40 controls the discharge control FET 32, to thereby change the drive current flowing into the motor 16.

According to the handy cleaner 2 of the present embodiment, therefore, it may be possible to suppress power imbalance among the cells 21-23 of the battery 26 due to changeover of the rotation speed of the motor 16. Thus, deterioration of the battery 26 may be suppressed.

Here, in the present embodiment, the discharge control FET 32 corresponds to an example of a semiconductor device that constitutes a current limiting device of the present invention, the driving switch 11 corresponds to an example of the operation switch of the present invention, and the control circuit 40 including the microcomputer corresponds to an example of a first drive device and a second drive device of the present invention.

Also, the drive current that the control circuit 40 flows into the motor 16 through the discharge control FET 32 when the operation mode is the high mode or the low mode corresponds to an example of a first drive current. In an example, a function as the first drive device of the present invention is realized by processes in S110 to S130 (corresponding to an example of a first control process) in the operation mode setting process.

Further, the drive current that the control circuit 40 flows into the motor 16 through the discharge control FET 32 when the operation mode is the high-power mode corresponds to an example of a second drive current. In an example, a function as the second drive device of the present invention is realized by processes in S110, S120, and S140 to S160 (corresponding to an example of a second control process) in the operation mode setting process.

Although one embodiment of the present invention has been described above, the present invention should not be limited to the above-described embodiment, but may be practiced in various forms.

In the above embodiment, the description has been provided about a case where the present invention is applied to the rechargeable handy cleaner 2. For example, the present invention may be applied to a dust collector provided with a battery, in the same manner as in the above embodiment.

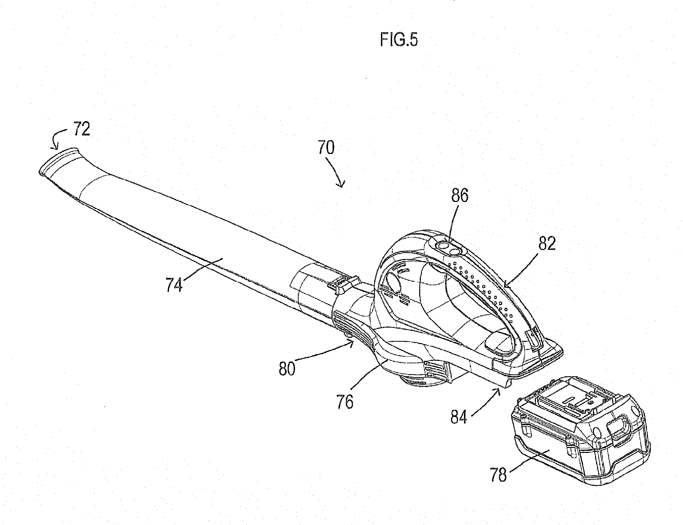

Also, the present invention may be applied to, for example, an air blowing apparatus to discharge air, such as a rechargeable blower 70 shown in FIG. 5 or the like to be used to blow off dust by discharging high-pressure air, in the same manner as in the above embodiment.

The blower 70 shown in FIG. 5 is constituted by a tubular nozzle 74 provided at a top end thereof with a discharge port 72 to discharge high-pressure air, a blower body 76 to which a rear end of the nozzle 74 is attached, and a battery pack 78 to be detachably attached to the blower body 76.

An air inlet port 80 to introduce air therethrough is provided in a side wall of the blower body 76, and a holding section 82 to be held by the user is provided in an upper portion of the blower body 76. An attachment portion 84 to attach thereto the battery pack 78 is provided in the blower body 76 on an opposite side to the nozzle 74.

Also, in a front portion of the holding section 82 on a side of the nozzle 74, there is provided an electronic switch 86 to be operated by a user in a same manner as the electronic switch 10 in the above described embodiment.

Further, inside the blower body 76, there are provided a discharge fan to introduce air from the air inlet port 80 and discharge the air toward the nozzle 74, a motor to rotate the discharge fan, a control circuit board to operate when receiving power supply from the battery pack 78 and control driving of the motor in accordance with a drive command from the electronic switch 86, and others.

Also in the rechargeable blower 70 configured as above, if a control circuit including a microcomputer is mounted on the control circuit board, and the control circuit is configured to control semiconductor devices (an FET, a bipolar transistor, etc.) provided on an electrical conduction path from the battery pack 78 to the motor in a same manner as the control circuit 40 of the above embodiment, the same effects as in the above embodiment may be achieved.

In the above embodiment, it has been described that the drive current flowing into the motor 16 is controlled by providing the discharge control FET 32, which is a semiconductor device, on the electrical conduction path to the motor 16, and driving the discharge control FET 32 with the PWM signal outputted from the control circuit 40.

In a case of applying the present invention to an apparatus that is provided with a resistor as the current limiting device on the electrical conduction path to the motor 16 and is configured such that the drive current is flown to the motor 16 through the resistor in order to drive the motor 16, it may be possible to form an electrical conduction path to bypass the resistor when the driving switch 11 is pressed and held, to thereby increase the drive current to the motor 16.

The above embodiment is configured such that the operation mode is changed over among the high mode, the low mode, and the high-power mode in accordance with the user's operation of the driving switch 11, and a changeover to the high-power mode is performed only while the driving switch 11 is pressed and held.

The present invention may be applied, for example, to an apparatus in which the operation mode is changed over between two modes, i.e., the high mode and the low mode, in accordance with the operation of the driving switch 11. In this case, by performing high-speed driving of the motor 16 in the high mode only while the driving switch 11 is pressed and held, it may be possible to suppress driving of the motor 16 in the high mode to a necessary minimum level in a same manner as in the above embodiment, to thereby suppress power consumption of the battery 26.

In the above embodiment, it has been described that the driving switch 11 and the stopping switch 12 constituting the electronic switch 10 are both normally-open type operation switches. These operation switches may be normally-closed type (b-contact) switches that enter into the off state in accordance with the user's operation.

## Claims

1. A fluid apparatus comprising:
a fan (15) configured to suction or discharge a gas;
a motor (16) configured to drive the fan (15);
a battery (26) configured to supply electric power to the motor (16); and
a current limiting device (32) provided on an electrical conduction path from the battery (26) to the motor (16),
**characterised in that** the fluid apparatus further comprises:
a first drive device (40) configured to, when receiving a first drive command from outside, flow a first drive current to the motor (16) through the current limiting device (32), to thereby cause normal rotation of the motor (16);
a second drive device (40) configured to, while a second drive command is being inputted, flow a second drive current, which is larger than the first drive current, from the battery (26) to the motor (16), to thereby cause high speed rotation of the motor (16);
one operation switch (11) configured to change from an off state of the motor (16) to the normal rotation of the motor (16), change from the normal rotation of the motor (16) to the high speed rotation of the motor (16) when the current operation mode is normal rotation, and change from the high speed rotation of the motor (16) to the normal rotation of the motor (16) when the current operation mode is the high speed rotation of the motor (16),
wherein the first drive device (40) is configured to, while causing the normal rotation of the motor (16), change the first drive current to thereby change over a rotation speed of the motor (16) to a high speed or a low speed, each time the operation switch (11) is operated, and
wherein the second drive device (40) configured to, while the normal rotation of the motor (16) is being caused by the first drive device (40) and when an operation of the operation switch (11) has continued for a predetermined time period or more, thereafter flow the second drive current and thereby rotate the motor (16) faster than the rotation speed generated due to the first drive device (40) until the operation of the operation switch (11) is finished, the second drive device (40) being further configured to, when the operation of the operation switch (11) is finished, cause the first drive device to cause the normal rotation of the motor (16).

2. The fluid apparatus according to claim 1,
wherein the current limiting device (32) includes a semiconductor device that is capable of controlling a current flowing through the electrical conduction path, and
wherein each of the first drive device (40) and the second drive device (40) controls the current flowing from the battery (26) to the motor (16) through the current limiting device.

3. The fluid apparatus according to claim 2, further comprising a microcomputer to which the operation switch (11) is connected,
the microcomputer functioning as the first drive device (40) and the second drive device (40) by executing:
a first control process (S110-S130) to determine that, when the operation switch (11) is operated by a user, the first drive command has been inputted, control the semiconductor device such that the first drive current flows to the motor (16), and thereafter change the first drive current to thereby change over a rotation speed of the motor (16) to a high speed or a low speed, each time the operation switch (11) is operated; and
a second control process (S110, S120, S140-S160) to control the semiconductor device such that, while the motor (16) is driven at the high speed or the low speed by the first control process and when an operation by the user of the operation switch (11) has continued for a predetermined time period or more, the second drive current thereafter flows to the motor (16) until the operation by the user of the operation switch (11) is finished.

4. The fluid apparatus according to claim 2 or 3,
wherein the first drive device (40) performs switching drive of the semiconductor device by means of a pulse-width modulation signal having a duty ratio corresponding to the first drive command, to thereby flow the first drive current to the motor (16), and
wherein the second drive device (40) drives the semiconductor device by means of a drive signal having a larger duty ratio than the pulse-width modulation signal used by the first drive device (40) to perform the switching drive of the semiconductor device, to thereby flow the second drive current to the motor (16).

5. The fluid apparatus according to any one of claims 1 to 4, wherein the fluid apparatus is a dust collector (2).

6. The fluid apparatus according to any one of claims 1 to 4, wherein the fluid apparatus is a blower.

## Patentansprüche

1. Fluidvorrichtung, mit:
einem Ventilator (15), der konfiguriert ist zum Ansaugen oder Ausgeben eines Gases;
einem Motor (16), der konfiguriert ist zum Antreiben des Ventilators (15);
einer Batterie (26), die konfiguriert ist zum Liefern einer elektrischen Leistung an den Motor (16); und
einer Strombegrenzungsvorrichtung (32), die auf einem elektrischen Leitungspfad von der Batterie (26) zu dem Motor (16) bereitgestellt ist;
**dadurch gekennzeichnet, dass** die Fluidvorrichtung ferner aufweist:
eine erste Antriebsvorrichtung (40), die konfiguriert ist zum Anlegen eines ersten Antriebsstroms an den Motor (16) über die Strombegrenzungsvorrichtung (32), wenn ein erster Antriebsbefehl von außen empfangen wird, um dadurch eine normale Drehung des Motors (16) zu veranlassen;
eine zweite Antriebsvorrichtung (40), die konfigurier ist, um einen zweiten Antriebsstrom, der größer als der erste Antriebsstrom ist, von der Batterie (26) zu dem Motor (16) fließen zu lassen, während ein zweiter Antriebsbefehl eingegeben wird, um dadurch eine hohe Drehzahl des Motors (16) zu veranlassen;
einen Bedienschalter (11), der konfiguriert ist zum Ändern eines AUS-Zustands des Motors (16) in die normale Drehung des Motors (16), zum Ändern von der normalen Drehung des Motors (16) zu der hohen Drehzahl des Motors (16), wenn der augenblickliche Betriebsmodus eine normale Drehung ist, und zum Ändern von der hohen Drehzahl des Motors (16) zu der normalen Drehung des Motors (16), wenn der augenblickliche Betriebsmodus die hohe Drehzahl des Motors (16) ist, wobei
die erste Antriebsvorrichtung (40) konfiguriert ist zum Ändern des ersten Antriebsstroms, während die normale Drehung des Motors (16) veranlasst ist, um dadurch eine Drehzahl des Motors (16) in eine hohe Drehzahl oder eine niedrige Drehzahl zu ändern, jedes Mal wenn der Bedienschalter (11) betätigt wird, und
die zweite Antriebsvorrichtung (40) konfiguriert ist, während die normale Drehung des Motors (16) durch die erste Antriebsvorrichtung (40) veranlasst ist und eine Betätigung des Bedienschalters (11) für eine vorbestimmte Zeitperiode oder länger anhält, anschließend den zweiten Antriebsstrom fließen zu lassen und dadurch den Motor (16) schneller als mit der Drehzahl zu drehen, die aufgrund der ersten Antriebsvorrichtung (40) erzeugt wird, bis die Betätigung des Bedienschalters (11) beendet ist, wobei die zweite Antriebsvorrichtung (40) ferner konfiguriert ist zum Veranlassen der ersten Antriebsvorrichtung die normale Drehung des Motors (16) zu veranlassen, wenn die Betätigung des Bedienschalters (11) beendet ist.

2. Fluidvorrichtung nach Anspruch 1, bei der
die Strombegrenzungsvorrichtung (32) eine Halbleitervorrichtung aufweist, die in der Lage ist, einen Strom, der durch den elektrischen Leitungspfad fließt, zu steuern, und
jede von der ersten Antriebsvorrichtung (40) und der zweiten Antriebsvorrichtung (40) den Strom steuert, der von der Batterie (26) zu dem Motor (16) über die Strombegrenzungsvorrichtung fließt.

3. Fluidvorrichtung nach Anspruch 2, ferner mit einem Mikrocomputer, mit dem der Bedienschalter (11) verbunden ist, wobei der Mikrocomputer als die erste Antriebsvorrichtung (40) und die zweite Antriebsvorrichtung (40) arbeitet, durch Ausführen von:
einem ersten Steuerungsprozess (S110-S130) zum Bestimmen, dass wenn der Bedienschalter (11) von einem Benutzer betätigt ist, der erste Antriebsbefehl eingegeben worden ist, zum Steuern der Halbleitervorrichtung derart, dass der erste Antriebsstrom zu dem Motor (16) fließt, und zum anschließenden Ändern des ersten Antriebsstroms, um dadurch eine Drehzahl des Motors (16) in eine hohe Drehzahl oder eine niedrige Drehzahl zu ändern, jedes Mal wenn der Bedienschalter (11) betätigt wird; und
einem zweiten Steuerungsprozess (S110, S120, S140-S160), um die Halbleitervorrichtung derart zu steuern, dass während der Motor (16) mit der hohen Drehzahl oder der niedrigen Drehzahl durch den ersten Steuerungsprozess angetrieben wird und eine Betätigung des Bedienschalters (11) durch den Benutzer für eine vorbestimmte Zeitperiode oder länger anhält, anschließend der zweite Antriebsstrom an den Motor (16) fließt, bis die Betätigung des Bedienschalters (11) durch den Benutzer beendet ist.

4. Fluidvorrichtung nach Anspruch 2 oder 3, bei der
die erste Antriebsvorrichtung (40) ein Schaltantreiben der Halbleitervorrichtung mittels eines Pulsweitenmodulationssignals mit einem Tastverhältnis durchführt, das dem ersten Antriebsbefehl entspricht, um dadurch den ersten Antriebsstrom an den Motor (16) fließen zu lassen, und
die zweite Antriebsvorrichtung (40) die Halbleitervorrichtung antreibt mittels eines Antriebssignals mit einem größeren Tastverhältnis als das Pulsweitenmodulationssignal, das von der ersten Antriebsvorrichtung (40) verwendet wird, zum Durchführen des Schaltantreiben der Halbleitervorrichtung, um dadurch den zweiten Antriebsstrom an den Motor (16) fließen zu lassen.

5. Fluidvorrichtung nach einem der Ansprüche 1 bis 4, bei der die Fluidvorrichtung ein Staubsammler (2) ist.

6. Fluidvorrichtung nach einem der Ansprüche 1 bis 4, bei dem die Fluidvorrichtung ein Gebläse ist.

## Revendications

1. Appareil de fluide comprenant :
un ventilateur (15) configuré pour aspirer ou décharger un gaz ;
un moteur (16) configuré pour entraîner le ventilateur (15) ;
une batterie (26) configurée pour fournir de l'énergie électrique au moteur (16) ; et
un dispositif de limitation de courant (32) prévu sur un chemin de conduction électrique allant de la batterie (26) au moteur (16) ;
**caractérisé en ce que** l'appareil de fluide comprend en outre :
un premier dispositif d'entraînement (40) configuré pour, lorsqu'il reçoit une première commande d'entraînement de l'extérieur, faire circuler un premier courant d'entraînement vers le moteur (16) à travers le dispositif de limitation de courant (32), pour provoquer ainsi une rotation normale du moteur (16) ;
un deuxième dispositif d'entraînement (40) configuré pour, pendant qu'une deuxième commande d'entraînement est entrée, faire circuler un deuxième courant d'entraînement, qui est plus grand que le premier courant d'entraînement, de la batterie (26) au moteur (16), pour provoquer ainsi une rotation à grande vitesse du moteur (16) ;
un commutateur de fonctionnement (11) configuré pour passer d'un état d'arrêt du moteur (16) à la rotation normale du moteur (16), passer de la rotation normale du moteur (16) à la rotation à grande vitesse du moteur (16) lorsque le mode de fonctionnement actuel est la rotation normale et passer de la rotation à grande vitesse du moteur (16) à la rotation normale du moteur (16) lorsque le mode de fonctionnement actuel est la rotation à grande vitesse du moteur (16),
dans lequel le premier dispositif d'entraînement (40) est configuré pour, tout en provoquant la rotation normale du moteur (16), modifier le premier courant d'entraînement pour ainsi faire passer une vitesse de rotation du moteur (16) à une grande vitesse ou à une faible vitesse, chaque fois que le commutateur de fonctionnement (11) est actionné, et
dans lequel le deuxième dispositif d'entraînement (40) est configuré pour, tandis que la rotation normale du moteur (16) est provoquée par le premier dispositif d'entraînement (40) et lorsqu'un fonctionnement du commutateur de fonctionnement (11) a continué pendant une période de temps prédéterminée ou plus, faire ensuite circuler le deuxième courant d'entraînement et faire ainsi tourner le moteur (16) plus rapidement que la vitesse de rotation générée par le premier dispositif d'entraînement (40) jusqu'à ce que le fonctionnement du commutateur de fonctionnement (11) soit terminé, le deuxième dispositif d'entraînement (40) étant en outre configuré pour, lorsque le fonctionnement du commutateur de fonctionnement (11) est terminé, faire en sorte que le premier dispositif d'entraînement provoque la rotation normale du moteur (16).

2. Appareil de fluide selon la revendication 1,
dans lequel le dispositif de limitation de courant (32) comprend un dispositif semi-conducteur qui est capable de contrôler un courant circulant à travers le chemin de conduction électrique, et
dans lequel chacun du premier dispositif d'entraînement (40) et du deuxième dispositif d'entraînement (40) contrôle le courant circulant de la batterie (26) au moteur (16) par l'intermédiaire du dispositif de limitation de courant.

3. Appareil de fluide selon la revendication 2, comprenant en outre un micro-ordinateur auquel le commutateur de fonctionnement (11) est connecté,
le micro-ordinateur fonctionnant comme le premier dispositif d'entraînement (40) et le deuxième dispositif d'entraînement (40) en exécutant :
un premier procédé de contrôle (S110-S130) pour déterminer que, lorsque le commutateur de fonctionnement (11) est actionné par un utilisateur, la première commande d'entraînement a été entrée, contrôler le dispositif semi-conducteur de sorte que le premier courant d'entraînement circule vers le moteur (16) et ensuite changer le premier courant d'entraînement pour changer ainsi une vitesse de rotation du moteur (16) en une grande vitesse ou une faible vitesse, chaque fois que le commutateur de fonctionnement (11) est actionné ; et
un deuxième procédé de contrôle (S110, S120, S140-S160) pour contrôler le dispositif semi-conducteur de telle sorte que, tandis que le moteur (16) est entraîné à la grande vitesse ou à la faible vitesse par le premier procédé de contrôle et lorsqu'une opération par l'utilisateur du commutateur de fonctionnement (11) a continué pendant une période de temps prédéterminée ou plus, le deuxième courant d'entraînement circule ensuite vers le moteur (16) jusqu'à ce que l'opération par l'utilisateur du commutateur de fonctionnement (11) soit terminée.

4. Appareil de fluide selon la revendication 2 ou 3,
dans lequel le premier dispositif d'entraînement (40) effectue un entraînement par commutation du dispositif semi-conducteur au moyen d'un signal de modulation de largeur d'impulsion ayant un rapport cyclique correspondant à la première commande d'entraînement, pour faire ainsi circuler le premier courant d'entraînement vers le moteur (16), et
dans lequel le deuxième dispositif d'entraînement (40) entraîne le dispositif semi-conducteur au moyen d'un signal d'entraînement ayant un rapport cyclique plus grand que le signal de modulation de largeur d'impulsion utilisé par le premier dispositif d'entraînement (40) pour effectuer l'entraînement de commutation du dispositif semi-conducteur, pour faire ainsi circuler le deuxième courant d'entraînement vers le moteur (16).

5. Appareil de fluide selon l'une quelconque des revendications 1 à 4,
dans lequel l'appareil de fluide est un collecteur de poussière (2).

6. Appareil de fluide selon l'une quelconque des revendications 1 à 4,
dans lequel l'appareil de fluide est une souffleuse.
